# EUROPEAN PATENT APPLICATION

(11) **EP 1 168 470 A1**
(43) Date of publication of application: **02.01.2002**
(21) Application number: 01115849.0
(22) Date of filing: 28.06.2001
(51) Int. Cl.: H01M 4/24

(54) **Hydrogen absorbing alloy electrode, method of fabricating the same and alkaline storage battery**

(30) Priority: 30.06.2000 JP 2000198201
(71) Applicant: SANYO ELECTRIC Co., Ltd., Moriguchi-shi, Osaka 570 (JP)
(72) Inventor: Maeda, Reizo, Ing., Moriguchi-shi (JP); Harada, Yasuyuki, Ing., Moriguchi-shi (JP); Tanaka, Tadayoshi, Ing., Moriguchi-shi (JP); Shinyama, Katsuhiko, Ing., Moriguchi-shi (JP); Matsuura, Yoshinori, Ing., Moriguchi-shi (JP); Mohma, Toshiyuki, Ing., Moriguchi-shi (JP); Yonezu, Ikuo, Ing., Moriguchi-shi (JP)
(74) Representative: Glawe, Delfs, Moll & Partner

(57) **Abstract**

A hydrogen absorbing alloy electrode employed as a negative electrode of an alkaline storage battery according to the present invention is obtained by adhering an electrode material consisting of hydrogen absorbing alloy powder and a binding agent composed of a polymeric material to a current collector, an aqueous polymeric material except fluorocarbon resin is applied to a surface of the hydrogen absorbing alloy electrode, to form a coating layer, and a polymeric material in the coating layer is different from the polymeric material in the binding agent.

## Description

### BACKGROUND OF THE INVENTION

### Field of the Invention

The present invention relates to a hydrogen absorbing alloy electrode obtained by adhering an electrode material consisting of hydrogen absorbing alloy powder and a binding agent composed of a polymeric material to a current collector, a method of fabricating the same, and an alkaline storage battery such as a nickel-metal hydride battery employing the above-mentioned hydrogen absorbing alloy electrode as its negative electrode. In particular, the present invention is characterized in that the hydrogen absorbing alloy electrode is improved so as to prevent dropping of hydrogen absorbing alloy powder from the hydrogen absorbing alloy electrode, to improve output characteristics and charge/discharge cycle performance of the alkaline storage battery, and to prevent a rise in internal pressure of the battery during overcharging.

### Description of the Related Art

A nickel-metal hydride battery employing a hydrogen absorbing alloy electrode as its negative electrode has been conventionally known as one of alkaline storage batteries. As a hydrogen absorbing alloy electrode of the above-mentioned alkaline storage battery, a hydrogen absorbing alloy electrode obtained by adhering an electrode material consisting of hydrogen absorbing alloy powder and a binding agent composed of a polymeric material to a current collector has been generally employed.

However, in the alkaline storage battery employing the above-mentioned hydrogen absorbing alloy electrode, there exist problems that the hydrogen absorbing alloy powder drops off the hydrogen absorbing alloy electrode, resulting in degraded charge/discharge cycle performance of the alkaline storage battery, and that gas generates during overcharging, resulting in a rise in internal pressure of the battery.

Therefore, in recent years, Japanese Patent Laid-Open No. Hei6(1994)-140033 has proposed a method of fixing a surface of a hydrogen absorbing alloy electrode with an oxygen-transmissible pasting agent such as polyvinyl pyrrolidone, to prevent a rise in internal pressure of the battery due to gas generation during overcharging. Further, Japanese Patent Laid-Open No. Hei5(1993)-182687 has proposed a method of coating a surface of a hydrogen absorbing alloy electrode with a fluorocarbon polymeric material, to prevent dropping of hydrogen absorbing alloy powder from a hydrogen absorbing alloy electrode. Further, Japanese Patent Laid-Open No. Hei9(1997)-22691 has proposed a method of coating a surface of a hydrogen absorbing alloy electrode with water-repellent fluorocarbon resin and the like, to prevent a rise in internal pressure of the battery due to gas generation during rapid overcharging.

Unfortunately however, in the alkaline storage batteries as disclosed in the above-mentioned gazettes, there still exist some problems. For example, dropping of hydrogen absorbing alloy powder from hydrogen absorbing alloy electrodes is not sufficiently prevented, whereby charge/discharge cycle performance of the alkaline storage batteries is not enough improved. Furthermore, gas generation during overcharging is not sufficiently prevented, whereby a rise in internal pressure of the batteries is not enough prevented. Moreover, sufficient ion conductivity in hydrogen absorbing alloy electrodes is not obtained, so that high output of the batteries is not attained.

### SUMMARY OF THE INVENTION

The first object of the present invention is to prevent dropping of hydrogen absorbing alloy powder from a hydrogen absorbing alloy electrode in a case where an alkaline storage battery employs as its negative electrode a hydrogen absorbing alloy electrode obtained by adhering an electrode material consisting of hydrogen absorbing alloy powder and a binding agent composed of a polymeric material to a current collector thereof.

The second object of the present invention is to attain improved output characteristics and charge/discharge cycle performance of the above-mentioned alkaline storage battery employing as its negative electrode said hydrogen absorbing alloy electrode.

The third object of the present invention is to prevent a rise in internal pressure of the battery during overcharging in the above-mentioned alkaline storage battery employing as its negative electrode said hydrogen absorbing alloy electrode.

A hydrogen absorbing alloy electrode according to the present invention is a hydrogen absorbing alloy electrode obtained by adhering an electrode material consisting of hydrogen absorbing alloy powder and a binding agent composed of a polymeric material to a current collector thereof. Further, in a hydrogen absorbing alloy electrode according to the present invention, an aqueous polymeric material except fluorocarbon resin is applied on a surface of said electrode, to form a coating layer, and a polymeric material in said coating layer is different from the polymeric material in the binding agent.

In fabricating the hydrogen absorbing alloy electrode as described above, an electrode material consisting of hydrogen absorbing alloy powder and a binding agent composed of a polymeric material is adhered to a current collector, the emulsion or latex of an aqueous polymeric material which is different from the polymeric material in the binding agent and whose examples thereof do not include fluorocarbon resin, is applied on the surface of the electrode material, after which, the emulsion or latex is dried, to provide a coating layer.

Further, in the alkaline storage battery according to the present invention, the above-mentioned hydrogen absorbing alloy electrode is employed as its negative electrode of the battery.

Examples of the above-mentioned polymeric material to form the coating layer includes a copolymer comprising at least two types of elements selected from the group consisting of acrylic acid ester, methacrylic acid ester, aromatic olefin, conjugated diene and olefin. Specifically, styrene-methacrylic acid ester-acrylic acid ester copolymer, ethylene-acrylic acid ester copolymer, methacrylic acid methyl-butadiene copolymer, styrene-butadiene copolymer and the like can be employed.
Furthermore, a rubber material such as butadiene polymer can be employed.

When the hydrogen absorbing alloy electrode having the coating layer thereon composed of the above-mentioned polymeric material is employed as its negative electrode of the alkaline storage battery, the coating layer serves so as to sufficiently prevent dropping of the hydrogen absorbing alloy powder from the hydrogen absorbing alloy electrode. Further, compared with a conventional case where a coating layer composed of fluorocarbon resin is provided, an alkaline electrolyte is fully impregnated with hydrogen absorbing alloy powder through the coating layer, and contact between each hydrogen absorbing alloy powder is stably maintained over a long period. As a result, charge/discharge cycle performance of the alkaline storage battery is sufficiently improved, and the ion conductivity of the hydrogen absorbing alloy electrode is increased, resulting in a rise in output of the battery. Further, a rise in internal pressure due to gas generation during overcharging is sufficiently prevented.

In forming the above-mentioned coating layer on the surface of the hydrogen absorbing alloy electrode, when the amount of the coating layer is too small, the surface of the hydrogen absorbing alloy electrode can not be sufficiently coated, and thereby dropping of hydrogen absorbing alloy powder from the hydrogen absorbing alloy electrode can not be enough prevented. On the other hand, when the amount thereof is too large, the coating layer serves as a hindrance of reaction in the hydrogen absorbing alloy electrode. Therefore, the weight of the coating layer is preferably set in the range of 0.2 to 2 % by weight of the total weight of the coating layer, the hydrogen absorbing alloy powder and the binding agent. Further, the coating layer does not perfectly be separated from the electrode material layer consisting of the hydrogen absorbing alloy powder and the binding agent composed of the polymeric material, that is, one portion of the coating layer is occasionally included in the electrode material layer. Further, it is considered that there exists such a case where the coating layer is distributed so that the content thereof is gradually decreased from the surface of the hydrogen absorbing alloy electrode to the current collector.

Further, in forming the above-mentioned coating layer on the surface of the hydrogen absorbing alloy electrode, in the foregoing case where a coating layer is formed by drying emulsion or latex, when the temperature at which emulsion or latex is dried is set in the range of 60 to 90 °C, dropping of hydrogen absorbing alloy powder from a hydrogen absorbing alloy electrode is further prevented, and output of the alkaline storage battery is further improved. It is considered that the reason for the prevention of dropping of the powder and the improvement of output of the alkaline storage battery as set forth above is that, when the emulsion or latex is dried at the above-mentioned temperature, the condition of the polymeric material in the coating layer becomes better.

These and other objects, advantages and features of the invention will become apparent from the following description thereof taken in conjunction with the accompanying drawings which illustrate specific embodiment of the invention.

### BRIEF DESCRIPTION OF THE DRAWINGS

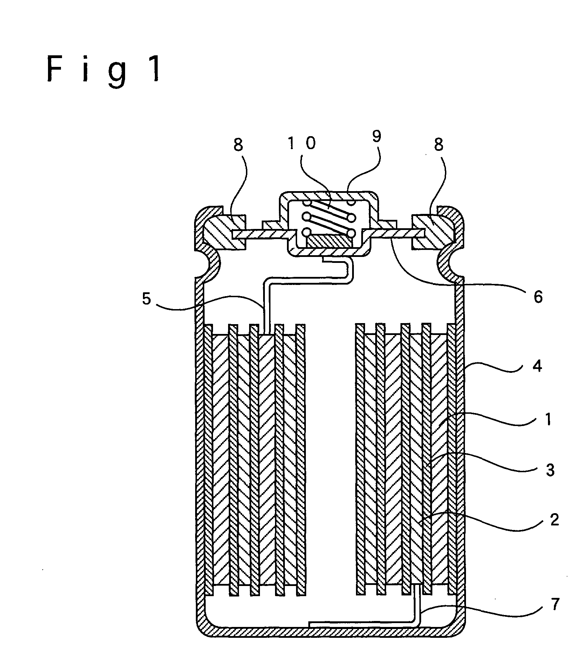

Fig. 1 is a schematic sectional view showing the internal construction of each of alkaline storage batteries fabricated in examples and comparative examples of the present invention.

### DESCRIPTION OF THE PREFERRED EMBODIMENTS

Hydrogen absorbing alloy electrodes, a method of fabricating the same and alkaline storage batteries according to examples of the present invention will be specifically described, and comparative examples will be taken to make it clear that in each of the alkaline storage batteries according to the examples, dropping of hydrogen absorbing alloy powder from the hydrogen absorbing alloy electrode is prevented, that output characteristics and charge/discharge cycle performance of the alkaline storage batteries are improved, and that a rise in internal pressure of the battery during overcharging is prevented. It should be appreciated that the hydrogen absorbing alloy electrode, the method of fabricating the same, and the alkaline storage battery according to the invention are not particularly limited to those in the following examples, and various changes and modifications may be made in the invention without departing from the spirit and scope thereof.

### (Example 1)

In the example 1, hydrogen absorbing alloy powder, having an average particle diameter of 40 *µ*m, of a hydrogen absorbing alloy electrode represented by a constitutional formula of MmNi_{3.2}Co_{0.7}Al_{0.3}Mn_{0.6} was employed, 0.5 part by weight of polyethylene oxide and polyvinyl pyrrolidone which were a binding agent were mixed with 100 part by weight of hydrogen absorbing alloy powder, and water was added to the mixture thus obtained, to prepare a paste having a proper viscosity. Further, a conductive substrate composed of a punched metal nickel-plated was inserted into the paste thus prepared, to apply the paste to the conductive substrate, was dried at a temperature of 90 °C for 30 minutes, and then was pressed, to fabricate a hydrogen absorbing alloy electrode.

Further, a solution of latex comprising 4 % by weight of styrene-methacrylic acid ester-acrylic acid ester copolymer was applied to the surface of the hydrogen absorbing alloy electrode, was dried at a temperature of 90 °C for 30 minutes, and then pressed, to fabricate a hydrogen absorbing alloy electrode having a coating layer formed thereon composed of styrene-methacrylic acid ester-acrylic acid ester copolymer.

The weight ratio of the coating layer to the total of the coating layer, the hydrogen absorbing alloy powder and the binding agent was 0.5 % by weight.

Further, the hydrogen absorbing alloy electrode having the coating layer thus formed thereon was employed as its negative electrode, to fabricate the alkaline storage battery which was cylindrical and having battery capacity of about 1 Ah, as shown in Figure 1.

A sintered nickel electrode obtained by impregnating a solution of nickel sulfate having cobalt sulfate and zinc sulfate added therein with a nickel-sintered substrate having a porosity of 85 % by a chemical impregnation method was employed as its positive electrode. Further, a nonwoven fabric made of polyolefine was employed as a separator while a solution of potassium hydroxide having a concentration of 8 mole per liter was employed as an alkaline electrolyte.

In fabricating an alkaline storage battery, as shown in Fig. 1, a separator 3 was interposed between the positive electrode 1 and negative electrode 2, and they were contained in a battery can 4 upon being spirally wound. Afterward, the above-mentioned alkaline electrolyte was pored into the battery can 4, the battery can 4 was sealed, the positive electrode 1 was connected to a sealing cover 6 through a positive electrode lead 5, and the negative electrode 2 was connected to the battery can 4 through a negative electrode lead 7, to electrically separate the battery can 4 and the sealing cover 6 by an insulating packing 8.

A coil spring 10 was provided between the sealing cover 6 and a positive electrode external terminal 9. When the internal pressure of the battery was abnormally increased, the coil spring 10 was compressed, so that gas inside the battery was discharged into the air.

### (Examples 2 to 5)

In each of the examples 2 to 5, in forming a coating layer on a hydrogen absorbing alloy electrode in the example 1, the type of a polymeric material to be employed in a coating layer was changed. Specifically, ethylene-acrylic acid ester copolymer was used in the example 2; methacrylic acid methyl-butadiene copolymer in the example 3; styrene-butadiene copolymer in the example 4; and butadiene polymer in the example 5, as shown in the following Table la. Except that the above-mentioned polymeric materials were employed in the example 2 to 5, a coating layer was formed on a surface of each hydrogen absorbing alloy electrode in the same manner as that in the example 1.

Further, except that each hydrogen absorbing alloy electrode having the coating layer thus formed thereon was employed, each alkaline storage battery in example 2 to 5 was fabricated in the same manner as that in the example 1.

### (Comparative Examples 1)

In the comparative examples 1, in forming a coating layer on a surface of a hydrogen absorbing alloy electrode in the example 1, polyethylene oxide and polyvinyl pyrrolidone which are same as the binding agent used in the hydrogen absorbing alloy electrode were used.
Specifically, a solution containing polyethylene oxide and polyvinyl pyrrolidone in a weight ratio of 1 : 1 was used. Except that the above-mentioned solution was employed, a coating layer consisting of polyethylene oxide and polyvinyl pyrrolidone was formed on a surface of a hydrogen absorbing alloy electrode in the same manner as that in the example 1.

Further, except that the hydrogen absorbing alloy electrode having the coating layer thus formed thereon consisting of polyethylene oxide and polyvinyl pyrrolidone was employed, an alkaline storage battery in the comparative examples 1 was fabricated in the same manner as that in the example 1.

### (Comparative Example 2)

In the comparative example 2, in forming a coating layer on a surface of a hydrogen absorbing alloy electrode in the example 1, a dispersion comprising 33 % by weight of polytetrafluoroethylene was employed. Except that the above-mentioned dispersion was employed, a coating layer composed of polytetrafluoroethylene was formed on a surface of a hydrogen absorbing alloy electrode in the same manner as that in the example 1.

Further, except that the hydrogen absorbing alloy electrode having the coating layer thus formed thereon composed of polytetrafluoroethylene was employed, an alkaline storage battery in the comparative example 2 was fabricated in the same manner as that in the example 1.

### (Comparative Example 3)

In the comparative example 3, in forming a coating layer on a surface of a hydrogen absorbing alloy electrode in the example 1, a mixture obtained by mixing a dispersion comprising 33 % by weight of polytetrafluoroethylene, acetylene black, polyvinyl pyrrolidone, and water in the weight ratio of 1 : 3 : 3 : 30 was used. Except that the above-mentioned mixture was employed, a coating layer composed of polytetrafluoroethylene, acethylene black, and polyvinyl pyrrolidone was formed on a surface of a hydrogen absorbing alloy electrode in the same manner as that in the example 1.

Further, except that the hydrogen absorbing alloy electrode having the coating layer thus formed thereon composed of polytetrafluoroethylene, acethylene black, and polyvinyl pyrrolidone was used, an alkaline storage battery in the comparative example 3 was fabricated in the same manner as that in the example 1.

### (Comparative Example 4)

In the comparative example 4, a coating layer was not provided on a surface of a hydrogen absorbing alloy electrode in the example 1.

Except that a hydrogen absorbing alloy electrode not having a coating layer provided thereon was employed, an alkaline storage battery in the comparative example 4 was fabricated in the same manner as that in the example 1.

### (Comparative Example 5)

In the comparative example 5, in forming a coating layer on a surface of a hydrogen absorbing alloy electrode in the example 1, 1 part by weight of styrene-methacrylic acid ester-acrylic acid ester copolymer which was a binding agent was added to 100 part by weight of the above-mentioned hydrogen absorbing alloy powder, to fabricate a hydrogen absorbing alloy electrode.

Except that the coating layer composed of styrene-methacrylic acid ester-acrylic acid ester copolymer was formed on a surface of a hydrogen absorbing alloy electrode in the same manner as that in the example 1, and that a hydrogen absorbing alloy electrode employing styrene-methacrylic acid ester-acrylic acid ester copolymer as both a binding agent in the electrode and a coating layer was employed, an alkaline storage battery in the comparative example 5 was fabricated in the same manner as that in the example 1.

Further, in each of alkaline storage batteries thus fabricated in the example 1 to 5 and the comparative example 1 to 5, output characteristics, charge/discharge cycle performance, internal pressure performance and bond strength were tested. The results thereof were shown in the following Table 1a and 1b.

In regard to output characteristics, each alkaline storage battery as described above was charged for 1 hour at a constant current of 0.5 A and was stopped for 1 hour, and was then discharged at a constant current of 5 A, to measure the voltage (V) of the battery at the time point of 15 seconds after discharging.

Further, in regard to charge/discharge cycle performance, each alkaline storage battery as described above was charged for 1 hour at a constant current of 1 A and was then discharged at a constant current of 1 A up to 1 V. The foregoing charging and discharging was taken as one cycle, and charging and discharging was repeatedly performed, to find the number of times of cycles up to the time point where discharge capacity amounts to 70 % of the initial discharge. The results thereof were shown in the following Table 1b.

In regard to internal pressure performance, internal pressure of battery (MPa) was measured at the time point where each alkaline storage battery as described above was charged at a constant current of 1 A for 1.5 hours.

Further, in regard to bond strength, in a hydrogen absorbing alloy electrode of each alkaline storage battery as described above, the electrode material for one-side of each electrode was removed, and the other side thereof was cut with a cutter to be like a checkerboard, to form 100 squares whose side was 1 mm. A binding tape was put on the 100 squares, and was put off, to measure the number of squares whose electrode material was put off by the binding tape.

**Table 1a**

| | Polymeric material in coating layer | polymeric material in binding agent | output characteristics (V) |
|---|---|---|---|
| example 1 | styrene-methacrylic acid ester-acrylic acid ester copolymer | polyethylene oxide and polyvinyl pyrrolidone | 1.165 |
| example 2 | ethylene-acrylic acid ester copolymer | polyethylene oxide and polyvinyl pyrrolidone | 1.164 |
| example 3 | methacrylic acid methyl-butadiene copolymer | polyethylene oxide and polyvinyl pyrrolidone | 1.164 |
| example 4 | styrene-butadiene copolymer | polyethylene oxide and polyvinyl pyrrolidone | 1.163 |
| example 5 | butadiene polymer | polyethylene oxide and polyvinyl pyrrolidone | 1.159 |
| comparative example 1 | polyethylene oxide and polyvinyl pyrrolidone | polyethylene oxide and polyvinyl pyrrolidone pyrrolidone | 1.155 |
| comparative example 2 | polytetrafluoro-ethylene | polyethylene oxide and polyvinyl pyrrolidone | 1.150 |
| comparative example 3 | polytetrafluoro-ethylene, acetylene black and polyvinyl pyrrolidone | polyethylene oxide and polyvinyl pyrrolidone | 1.154 |
| comparative example 4 | none | polyethylene oxide and polyvinyl pyrrolidone | 1.158 |
| comparative example 5 | styrene-methacrylic acid ester-acrylic acid ester copolymer | styrene-methacrylic acid ester-acrylic acid ester copolymer | 1.149 |

**Table 1b**

| | charge/discharge cycle performance (number of times of cycles) | internal pressure performance (MPa) | bond strength (number of squares whose electrode material is put off) |
|---|---|---|---|
| example 1 | 551 | 0.7 | 20 |
| example 2 | 550 | 0.7 | 20 |
| example 3 | 549 | 0.75 | 20 |
| example 4 | 544 | 0.75 | 21 |
| example 5 | 540 | 0.75 | 23 |
| comparative example 1 | 518 | 1.3 | 33 |
| comparative example 2 | 527 | 0.9 | 31 |
| comparative example 3 | 534 | 0.8 | 29 |
| comparative example 4 | 510 | 1.2 | 55 |
| comparative example 5 | 532 | 1.2 | 27 |

As apparent from the results, compared with each of the alkaline storage batteries in the comparative examples 1 and 5 employing the same polymeric material as both binding agent and coating layer, each of the alkaline storage batteries in the comparative examples 2 and 3 employing fluorocarbon resin as a coating layer to be provided on a surface of a hydrogen absorbing alloy electrode, and an alkaline storage battery in the comparative example 4 not having a coating layer on a surface of a hydrogen absorbing alloy electrode, in each of the alkaline batteries in the examples 1 to 5 employing as a polymeric material in a coating layer to be provided on a surface of a hydrogen absorbing alloy electrode, styrene-methacrylic acid ester-acrylic acid ester copolymer, ethylene-acrylic acid ester copolymer, methacrylic acid methyl-butadiene copolymer, styrene-butadiene copolymer and butadiene polymer, and as a binding agent polyethylene oxide and polyvinyl pyrrolidone which are different from the polymeric material in the coating layer, output characteristics, charge/discharge cycle performance, internal pressure performance and bond strength were all improved.

### (Examples 1.1 to 1.6)

In each of the examples 1.1 to 1.6, in applying a solution of latex containing styrene-methacrylic acid ester-acrylic acid ester copolymer to a surface of a hydrogen absorbing alloy electrode, to form a coating layer composed of styrene-methacrylic acid ester-acrylic acid ester copolymer on a surface of a hydrogen absorbing alloy electrode in the example 1, a concentration of styrene-methacrylic acid ester-acrylic acid ester copolymer in the above-mentioned solution of latex was changed. Specifically, the concentration was 0.8 % by weight in the example 1.1, 1.7 % by weight in the example 1.2, 8 % by weight in the example 1.3, 17 % by weight in the example 1.4, 33 % by weight in the example 1.5, and 42 % by weight in the example 1.6.

When a coating layer composed of styrene-methacrylic acid ester-acrylic acid ester copolymer was provided on a surface of each hydrogen absorbing alloy electrode as described above, the weight ratio of the coating layer to the total of the coating layer, hydrogen absorbing alloy powder, and a binding agent was 0.1 % by weight in the example 1.1, 0.2 % by weight in the example 1.2, 1 % by weight in the example 1.3, 2 % by weight in the example 1.4, 4 % by weight in the example 1.5, and 5 % by weight in the example 1.6.

Further, except that a hydrogen absorbing alloy electrode having the above-mentioned coating layer provided thereon was employed, each alkaline storage battery in example 1.1 to 1.6 was fabricated in the same manner as that in the example 1.

Further, in regard to each alkaline storage battery thus fabricated in the example 1.1 to 1.6, output characteristics and bond strength were tested in the same manner as above-mentioned. The results thereof were shown in the following Table 2 together with the result of the case of the example 1.

**Table 2**

| | | | |
|---|---|---|---|
| a coating layer : styrene-methacrylic acid ester-acrylic acid ester copolymer | | | |
| a binding agent : polyethylene oxide and polyvinyl pyrrolidone | | | |

| | weight ratio of coating layer (% by weight) | output characteristics (V) | bond strength (number of squares whose electrode material is put off ) |
|---|---|---|---|
| example 1.1 | 0.1 | 1.160 | 22 |
| example 1.2 | 0.2 | 1.163 | 20 |
| example 1 | 0.5 | 1.165 | 20 |
| example 1.3 | 1 | 1.164 | 20 |
| example 1.4 | 2 | 1.163 | 20 |
| example 1.5 | 4 | 1.161 | 20 |
| example 1.6 | 5 | 1.160 | 20 |

As apparent from the results, in each of alkaline storage batteries in the example 1 and 1.2 to 1.4, wherein the weight ratio of a coating layer to the total of a coating layer, hydrogen absorbing alloy powder, and a binding agent was in the range of 0.2 to 2 % by weight, output characteristics and bond strength were improved, compared with each of the alkaline storage batteries in the example 1.1, 1.5 and 1.6, wherein said weight ratio was out of the above-mentioned range.

Further, in the example 1.1 to 1.6, an example of a case where styrene-methacrylic acid ester-acrylic acid ester copolymer was employed to form a coating layer was shown. However, ethylene-acrylic acid ester copolymer, methacrylic acid methyl-butadiene copolymer, styrene-butadiene copolymer and butadiene polymer are employed to form a coating layer, the same results can be obtained.
(Examples 1.7 to 1.11)

In each of the examples 1.7 to 1.11, in applying a solution of latex consisting 4 % by weight of styrene-methacrylic acid ester-acrylic acid ester copolymer to a surface of a hydrogen absorbing alloy electrode, drying the above-mentioned solution, to form the coating layer composed of styrene-methacrylic acid ester-acrylic acid ester copolymer on the surface of the electrode in the same manner as that in the example 1, the temperature at which the above-mentioned solution was dried for 30 minutes was 30 °C in the example 1.7, 50 °C in the example 1.8, 60 °C in the example 1.9, 80 °C in the example 1.10, and 100 °C in the example 1.11, as shown in the following Table 3.

Further, except that the hydrogen absorbing alloy electrode having the coating layer thus formed thereon was employed, each alkaline storage battery in the example 1.7 to 1.11 was fabricated in the same method as that in the example 1.

Further, in regard to each of alkaline storage batteries thus fabricated in the example 1.7 to 1.11, output characteristics and bond strength were tested in the same manner as above-mentioned. The results thereof were shown in the following Table 3 together with the result of the case of the example 1.

**Table 3**

| | | | |
|---|---|---|---|
| a coating layer : styrene-methacrylic acid ester-acrylic acid ester copolymer | | | |
| a binding agent : polyethylene oxide and polyvinyl pyrrolidone | | | |

| | drying temperature (°C) | output characteristics (V) | bond strength (number of squares whose electrode material is put off ) |
|---|---|---|---|
| example 1.7 | 30 | 1.160 | 23 |
| example 1.8 | 50 | 1.162 | 20 |
| example 1.9 | 60 | 1.164 | 20 |
| example 1.10 | 80 | 1.165 | 20 |
| example 1 | 90 | 1.165 | 20 |
| example 1.11 | 100 | 1.163 | 22 |

As apparent from the results, in applying a solution of latex consisting styrene-methacrylic acid ester-acrylic acid ester copolymer to a surface of a hydrogen absorbing alloy electrode, drying the above-mentioned solution, to form the coating layer composed of styrene-methacrylic acid ester-acrylic acid ester copolymer on the surface of the electrode, in each of alkaline storage batteries in the example 1, 1.9 and 1.10, wherein the temperature at which the above-mentioned solution was dried was 60 to 90 °C, output characteristics and bond strength were improved, compared with each of alkaline storage batteries in the example 1.7, 1.8 and 1.11, wherein the foregoing temperature was out of the above-mentioned range.

Further, in the example 1.7 to 1.11, an example of a case where styrene-methacrylic acid ester-acrylic acid ester copolymer was employed to form a coating layer was shown. However, when ethylene-acrylic acid ester copolymer, methacrylic acid metyl-butadiene copolymer, styrene-butadiene copolymer and butadiene polymer are employed as a coating layer, the same results can be obtained.

Although the present invention has been fully described by way of examples, it is to be noted that various changes and modification will be apparent to those skilled in the art.

Therefore, unless otherwise such changes and modifications depart from the scope of the present invention, they should be construed as being included therein.

## Claims

1. A hydrogen absorbing alloy electrode obtained by adhering an electrode material consisting of hydrogen absorbing alloy powder and a binding agent composed of a polymeric material to a current collector, wherein
an aqueous polymeric material except fluorocarbon resin is applied thereon, to form a coating layer, and a polymeric material in said coating layer is different from the polymeric material in the binding agent.

2. The hydrogen absorbing alloy electrode according to claim 1, wherein
the polymeric material in said coating layer is a copolymer comprising at least two types of elements selected from the group consisting of acrylic acid ester, methacrylic acid ester, aromatic olefin, conjugated diene and olefin.

3. The hydrogen absorbing alloy electrode according to claim 1, wherein
the polymeric material in said coating layer is at least one type of elements selected from the group consisting of styrene-methacrylic acid ester-acrylic acid ester copolymer, ethylene-acrylic acid ester copolymer, methacrylic acid methyl-butadiene copolymer, styrene-butadiene copolymer and butadiene polymer.

4. The hydrogen absorbing alloy electrode according to claim 1, wherein
the weight of said coating layer is in the range of 0.1 to 5 % by weight of the total weight of said coating layer, hydrogen absorbing alloy power and the binding agent.

5. The hydrogen absorbing alloy electrode according to claim 1, wherein
the weight of said coating layer is in the range of 0.2 to 2 % by weight of the total weight of said coating layer, hydrogen absorbing alloy power and the binding agent.

6. A method of fabricating a hydrogen absorbing alloy electrode comprising;
a step of adhering an electrode material consisting of hydrogen absorbing alloy powder and a binding agent composed of a polymeric material to a current collector;
a step of applying emulsion or latex of an aqueous polymeric material which is not fluorocarbon resin and is different from the polymeric material in the binding agent; and
a step of forming a coating layer by drying the emulsion or latex.

7. The method of fabricating a hydrogen absorbing alloy electrode according to claim 6, wherein
the temperature at which the emulsion and latex is dried is in the range of 30 to 100 °C.

8. The method of fabricating a hydrogen absorbing alloy electrode according to claim 6, wherein
the temperature at which the emulsion and latex is dried is in the range of 60 to 90 °C.

9. An alkaline storage battery, wherein the hydrogen absorbing alloy electrode according to claim 1 is employed as its negative electrode.
